# FASCICULE DE BREVET EUROPEEN

(11) **EP 2 107 043 B1**
(45) Date de publication et mention de la délivrance du brevet: **16.05.2012**
(21) Numéro de dépôt: 09290153.7
(22) Date de dépôt: 03.03.2009
(51) Int. Cl.: C01B 3/32, C01B 3/38, C01B 3/48, C01B 3/56

(54) **Procédé de production d'hydrogène hautement intégré thermiquement par reformage d'une charge hydrocarbonée**
Thermisch hoch integriertes Herstellungsverfahren von Wasserstoff durch Reformieren einer Kohlenwasserstoffladung
Hydrogen production method with high thermal integration through reforming of a hydrocarbonated charge

(30) Priorité: 28.03.2008 US 57591
(43) Date de publication de la demande: 07.10.2009
(73) Titulaire: IFP Energies nouvelles, 92852 Rueil-Malmaison Cedex (FR)
(72) Inventeur: Giroudiere, Fabrice, 69530 Orlienas (FR); Boyer, Christophe, 69390 Charly (FR)

(56) Documents cités:
- WO-A-01/77585
- WO-A-02/05363
- WO-A-2006/104787
- FR-A- 2 805 805
- FR-A- 2 867 464

## Description

### DOMAINE DE L'INVENTION

L'invention se situe dans le domaine de la production d'hydrogène par reformage d'une charge hydrocarbonée.

L'hydrogène est utilisé comme matière première dans de nombreuses applications chimiques. C'est un combustible alternatif, qui permet d'alimenter par exemple les piles à combustible. Celles-ci sont devenues absolument incontournables dans ce domaine car elles apportent une réponse à la production d'énergie non polluante.

Différents procédés sont utilisés pour la production d'hydrogène à partir d'un combustible hydrocarboné :
- l'oxydation partielle (POX pour Partial Oxydation selon la terminologie anglo-saxonne) est une réaction exothermique très souvent catalysée qui produit de l'hydrogène (H₂) par réaction entre la charge et l'oxygène (O₂) contenu par exemple dans l'air :
   dans le cas du méthane par exemple :

   CH₄ + ½ O₂ → CO + 2 H₂

Cette réaction est à différencier de l'oxydation totale (TOX pour Total Oxydation) qui ne produit pas d'hydrogène :
dans le cas du méthane par exemple :

CH₄ + 2 O₂ → CO2 + 2 H₂O

- le vaporeformage (SMR pour Steam Reforming selon la terminologie anglo-saxonne) est une réaction endothermique également catalytique qui produit de l'hydrogène par réaction de la charge avec de l'eau (H₂O) :
   dans le cas du méthane par exemple :

   CH₄ + H₂O → CO + 3 H₂
- le reformage autotherme (ATR pour Autothermal Reforming selon la terminologie anglo-saxonne) est le couplage de la réaction d'oxydation partielle et du vaporeformage.

L'exothermicité de l'oxydation partielle compensant l'endothermicité du vaporeformage, un reformeur autotherme peut être adiabatique, mises à part les pertes thermiques. Ce mode opératoire est donc important pour la gestion de l'énergie.

Le vaporeformage ou le reformage autotherme sont préférés dans le cade de l'invention car ils conduisent à un gaz de synthèse (mélange de monoxyde de carbone (CO), de dioxyde de carbone (CO₂) et d'hydrogène (H₂)) plus riche en hydrogène que l'oxydation partielle.

En sortie d'une unité de reformage, le gaz effluent riche en hydrogène contient beaucoup d'impuretés, en particulier du monoxyde de carbone (CO). Celui-ci est particulièrement gênant car il empoisonne le catalyseur des piles à combustible. C'est pour cela qu'une unité de séparation et de purification est généralement installée pour extraire l'hydrogène pur.

Il est connu que le taux de monoxyde de carbone peut être réduit en utilisant la réaction de conversion du monoxyde de carbone à l'eau (WGS pour Water Gas Shift reaction selon la terminologie anglo-saxonne).

CO + H₂O → CO₂ + H₂ (WGS)

Dans cette réaction, la vapeur d'eau utilisée peut être celle présente en excès dans l'effluent ou bien de la vapeur d'eau ajoutée au reformat. Elle nécessite l'emploi d'un catalyseur approprié.

En sortie d'un réacteur de conversion du monoxyde de carbone à l'eau, le pourcentage molaire de monoxyde de carbone (CO) est d'environ 0,5 ou supérieur. L'effluent contient aussi de l'eau et du dioxyde de carbone (CO₂). Selon le degré de pureté que l'utilisateur souhaite obtenir, il convient d'utiliser un moyen supplémentaire de purification.

Une possibilité est d'employer un système de purification par adsorption (PSA pour Pressure Swing Adsorption selon la terminologie anglo-saxonne). Cette technologie permet d'obtenir de l'hydrogène de très haute pureté (supérieure à 99,9 % vol) à partir d'un reformat après conversion du monoxyde de carbone. Le PSA est fondé sur le principe d'adsorption des impuretés sur des lits de tamis moléculaires. La régénération est obtenue par détente du lit d'adsorption et balayage par un gaz de purge interne. La continuité du système est assurée par l'installation en parallèle de plusieurs ballons.

Une autre possibilité consiste en une réaction d'oxydation préférentielle (PrOx pour Preferential Oxydation selon la terminologie anglo-saxonne).

CO + ½ O₂ → CO₂ (PrOx)

Cette réaction est menée dans un réacteur contenant un catalyseur adéquat, à une température qui privilégie l'oxydation du monoxyde de carbone avec l'oxygène de l'air en présence d'hydrogène mais sans consommer ou oxyder des quantités substantielles d'hydrogène, ni conduire à la réaction inverse de la conversion du monoxyde de carbone à l'eau (RWGS pour Reverse Water Gas Shift selon la terminologie anglo-saxonne).

Une purification par membrane est aussi un système utilisé fréquemment.

Les procédés de production d'hydrogène à grande échelle servent principalement aux industries qui ont besoin d'hydrogène pur pour certaines opérations chimiques, ou à l'approvisionnement de piles à combustibles stationnaires. L'avantage de ces grandes installations est la possibilité de maximiser le rendement en hydrogène en intégrant très fortement et de façon complexe toutes les unités de l'installation. Il est également possible d'utiliser des matériaux de construction coûteux mais résistants aux très hautes températures. Les procédés de production d'hydrogène pur de petite taille sont une réponse au problème du transport et du stockage de l'hydrogène. De petites unités, moins coûteuses et plus mobiles, permettent d'avoir une source d'hydrogène à proximité de l'installation qui en a besoin.

Un combustible sous forme liquide, comme par exemple l'éthanol, est plus facile à manipuler pour un utilisateur qu'une charge gazeuse. Cependant, l'utilisation d'une charge liquide pose le problème supplémentaire de la vaporisation de cette charge. En effet, avant d'entrer dans le reformeur autotherme, la charge doit être sous forme de vapeur et mélangée à la vapeur d'eau et à l'air. Le procédé doit donc, d'une part vaporiser la charge liquide, et d'autre part produire la vapeur d'eau nécessaire à la réaction. Il est difficile dans ces conditions de concevoir un procédé totalement autotherme sans pour autant diminuer le rendement en hydrogène pur de l'installation.

### ART ANTERIEUR

Des systèmes de production d'hydrogène sont au point depuis déjà un grand nombre d'année et les moyens correspondants sont bien connus de l'homme du métier. Cependant, les besoins en installations de petite taille et de faible coût poussent à travailler vers l'amélioration de ces systèmes de reformage.

Le système de production d'hydrogène décrit dans la demande de brevet WO 2002/088022 par exemple est caractérisé par l'absence de réacteur consacré à la vaporisation de l'eau. Dans ce procédé, la vaporisation se fait par échange thermique indirect avec un brûleur.

Dans la demande de brevet américain US 2002/0071790, l'intégration thermique du procédé de production d'hydrogène passe par un appareillage spécifique : un réacteur intégré. A l'intérieur de celui-ci, un brûleur de gaz résiduels du procédé permet de générer la chaleur nécessaire aux autres unités opérationnelles.

La demande de brevet WO 2005/118126 décrit un procédé de production d'hydrogène pur par reformage d'une charge hydrocarbonée. Ce procédé tente de répondre au besoin d'unités peu coûteuses et de petites tailles. Pour ce faire, l'intégration thermique du procédé est mise en avant et ainsi que l'utilisation judicieuse de la chaleur du l'effluent chaud du reformeur pour vaporiser l'eau nécessaire à la réaction de reformage.

La demande de brevet WO 02/05363 décrit un procédé de production d'hydrogène dans lequel l'effluent issu d'un brûleur sert à chauffer un flux de vapeur d'eau et de charge hydrocarbonée dans deux échangeurs de chaleur, l'un à haute et l'autre à basse température.

La demande de brevet FR 2867464 décrit un procédé de production d'hydrogène dans lequel la chaleur des fumées de combustion sortant d'un brûleur est utilisée pour vaporiser et surchauffer l'alcool alimentant un réacteur de vaporeformage et puis pour préchauffer l'air de combustion et le combustible nécessaires à la combustion.

La demande de brevet FR 2805805 décrit un procédé de production d'hydrogène dans lequel l'effluent issu d'un brûleur sert à chauffer premier un flux d'air et puis la charge hydrocarbonée.

La demande de brevet WO 2006/104787 décrit un procédé de production d'hydrogène dans lequel l'effluent issu d'un brûleur sert à chauffer premier le flux d'eau et puis la charge hydrocarbonée.

### DESCRIPTION SOMMAIRE DE L'INVENTION

L'invention concerne un procédé de production d'hydrogène intégré thermiquement par reformage d'une charge hydrocarbonée comprenant :
- une étape a dans laquelle un flux, dont la température est inférieure d'au moins 200 °C à la température de combustion à l'intérieur d'un brûleur, est sélectionné parmi un flux d'air et un flux d'eau, et est mélangé à l'effluent issu dudit brûleur, permettant de réduire la température de l'effluent issu dudit brûleur à moins de 725 °C ;
- une étape b dans laquelle le mélange issu de l'étape a entre dans un premier échangeur de chaleur, sert à surchauffer au moins un flux de vapeur d'eau et/ou de charge hydrocarbonée sous forme gazeuse, ledit flux ainsi surchauffé par échange thermique indirect étant injecté directement dans un réacteur de reformage où il sert de combustible, et ledit mélange ressort de l'échangeur ;
- une étape c dans laquelle le mélange issu de l'étape b entre dans un second échangeur de chaleur et sert à évaporer totalement un flux d'eau liquide et/ou de charge hydrocarbonée lorsque celle-ci est liquide.

De façon très préférée, lors de l'étape a, c'est un flux d'air à température ambiante qui est mélangé à l'effluent du brûleur.

### DESCRIPTION SOMMAIRE DES FIGURES

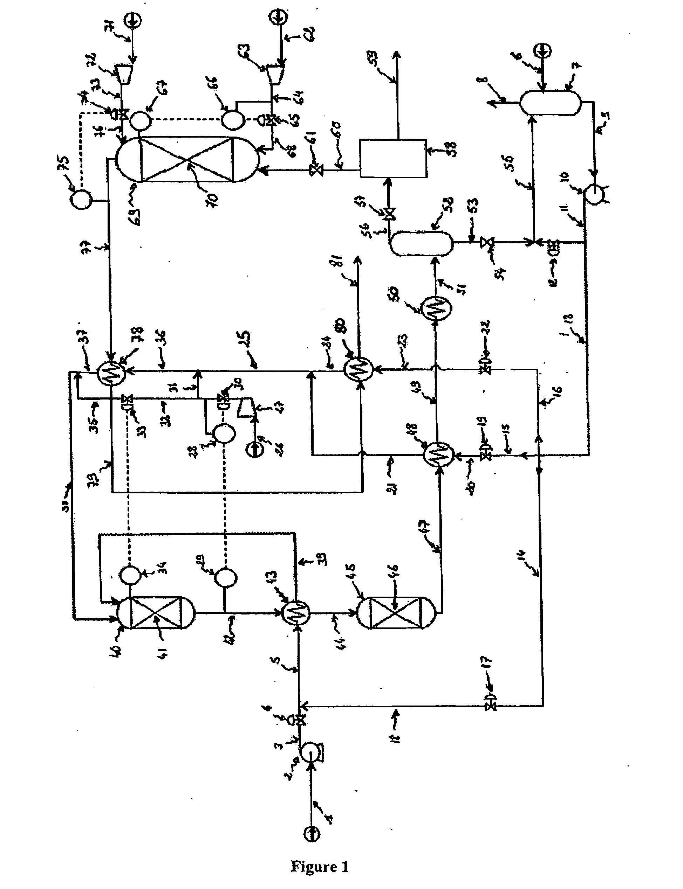

La figure 1 est un schéma de procédé représentant une variante d'installation de production d'hydrogène par reformage d'une charge hydrocarbonée selon l'invention.

### DESCRIPTION DÉTAILLÉE DE L'INVENTION

L'invention est adaptée au reformage de charges hydrocarbonées. De façon préférée, la charge hydrocarbonée est liquide. Il peut s'agir d'hydrocarbures, de coupes pétrolières ou d'alcools, de préférence l'éthanol, ou enfin des mélanges de ceux-ci. Un carburant potentiellement intéressant est le bioéthanol. Ce biocarburant est présenté comme une alternative énergétique durable. Il est obtenu par fermentation ou distillation des matières premières végétales telles que, par exemple, le saccharose ou l'amidon. Il a l'avantage de présenter un taux d'émission de gaz à effet de serre très bas.

Certaines charges peuvent contenir des composés soufrés ou des composés odorants ajoutés intentionnellement pour des raisons de sécurité ou des raisons légales. Ceux-ci peuvent détériorer les catalyseurs présents dans l'installation. Il est donc d'usage pour l'homme du métier de purifier la charge avant son utilisation, en utilisant par exemple une unité de désulfuration.

En plus de la charge hydrocarbonée, le procédé requiert un apport d'eau. Celle-ci est de préférence désionisée. Lorsque la réaction de reformage est un reformage autotherme, une source d'oxygène est nécessaire à la réaction. Celle-ci peut être de l'oxygène pur, de l'air ou de l'air enrichi en oxygène.

Le procédé de reformage mis en oeuvre dans l'invention est sélectionné parmi les procédés connus de l'homme du métier. L'invention utilise de préférence un réacteur de reformage autotherme (ATR selon la terminologie anglo-saxonne). Celui-ci fonctionne typiquement à une température comprise entre 400 °C et 1000°C, et est préférentiellement inférieure à 725 °C, qui est la température limite que peut supporter un matériau peu coûteux. Cependant, l'homme du métier cherche généralement à atteindre une température maximale car la réaction de reformage à la vapeur (ou vaporeformage) de la charge hydrocarbonée avec de l'eau, réaction qui favorise une fraction élevée d'hydrogène dans le gaz de synthèse formé, est endothermique. La pression est comprise traditionnellement entre 100 et 4000 kPa. Le réacteur de reformage autotherme contient un ou plusieurs catalyseurs convenablement choisis par l'homme du métier. Par exemple, des catalyseurs de reformage autotherme sont commercialisés par la société SüdChemie (monolith FCR-14) ou la société Engelhard (Selectra ATR catalyst).

Les charges introduites dans le réacteur de reformage sont au préalable préférablement chauffées à une température comprise entre 300 °C et 500 °C, de façon préférée entre 425 °C et 475 °C. Lorsque la charge hydrocarbonée est liquide, celle-ci peut être évaporée seule ou avec de l'eau et/ou avec de l'air et/ou avec de la vapeur d'eau avant d'être injectée dans le réacteur de reformage sous forme gazeuse. Il est généralement important de ne pas avoir à l'entrée du reformeur un mélange diphasique car cela réduit les performances du réacteur. L'eau est également vaporisée seule ou avec de l'air et/ou avec la charge hydrocarbonée. A l'entrée du reformeur, il est généralement important que la température du mélange reste inférieure à la température d'auto-allumage de la charge dans les conditions opératoires. Par exemple, dans le cas d'une charge hydrocarbonée constituée d'éthanol, la température à l'entrée du réacteur de reformage est préférablement inférieure à 475°C.

L'énergie nécessaire à ces vaporisations et chauffages est prise à différents endroits du procédé, par des échangeurs de chaleur bien positionnés et dimensionnés convenablement par l'homme du métier. Les sources de chaleur principales sont l'effluent chaud sortant du reformeur et les gaz de combustions provenant du brûleur de gaz résiduels. Pour des raisons de sécurité, il est généralement préféré de ne pas chauffer la source d'oxygène, par exemple l'air, par échange thermique avec l'effluent du réacteur de reformage ou du réacteur de conversion du monoxyde de carbone à l'eau car ces flux gazeux sont riches en hydrogène. De façon préférée, pour maximiser la production de vapeur d'eau, la charge hydrocarbonée liquide est vaporisée avec une quantité d'eau aussi importante que possible en utilisant la chaleur de l'effluent du reformeur. Certains autres effluents, comme celui du réacteur de conversion du monoxyde de carbone à l'eau (WGS selon la terminologie anglo-saxonne) s'il est présent, peuvent être mis à profit. Globalement, une bonne intégration thermique permet d'atteindre un rapport molaire H₂O/C assez élevé (préférentiellement supérieur à 3,0, plus préférentiellement supérieur à 4,0) ce qui permet d'atteindre de bon rendement en hydrogène (préférentiellement supérieur à 60 %, plus préférentiellement supérieur à 64 %) tout en maintenant le procédé autotherme, c'est à dire sans apport d'énergie extérieure.

Le reformat, c'est-à-dire l'effluent du réacteur de reformage, est un gaz de synthèse. Il est préférentiellement traité par une section de purification. Ladite section peut contenir une ou plusieurs unités permettant de réduire le taux de monoxyde de carbone, de séparer le gaz riche en hydrogène et de le purifier.

Typiquement, un réacteur de conversion du monoxyde de carbone à l'eau est le moyen le plus utilisé. Plusieurs zones catalytiques de conversion peuvent être employées pour réduire le taux de monoxyde de carbone dans le reformat. Il est par exemple courant pour un homme du métier d'utiliser deux zones catalytiques distinctes, une à haute température (de 300 à 560 °C) en amont (Conversion Haute Température ou HT-Shift selon la terminologie anglo-saxonne), une à basse température (de 200 à 260 °C) en aval (Conversion Basse Température ou LT-Shift selon la terminologie anglo-saxonne). Les catalyseurs adéquats sont choisis par l'homme du métier. Par exemple, des catalyseurs commerciaux sont proposés par les sociétés SüdChemie (PMS5B), BASF (K8-1 shift catalyst), Engelhard (Selectra shift catalyst, PM-5 WGS catalyst), Johnson Matthey (Katalco 71-5 catalyst). En sortie d'un réacteur de conversion du monoxyde de carbone à l'eau, le pourcentage volumique de monoxyde de carbone (CO) est généralement d'environ 0,5 ou supérieur. L'effluent contient aussi de l'eau et du dioxyde de carbone (CO₂). La réaction étant exothermique, la chaleur de l'effluent du réacteur de conversion du monoxyde de carbone à l'eau est généralement mise à profit pour chauffer d'autres flux du procédé.

L'effluent du réacteur de conversion du monoxyde de carbone à l'eau est de préférence refroidi par un ou plusieurs échangeurs, puis l'eau restante peut être éliminée de préférence dans un condenseur. Pour limiter la teneur en eau dans le gaz riche en hydrogène au-delà de l'unité de purification, la température du mélange est préférablement abaissée en dessous de 40 °C. L'eau du procédé récupérée après condensation peut préférablement être recyclée : après passage dans un système de purification d'eau, elle peut être retournée au début du procédé où elle peut servir par exemple de réactif à la réaction de vaporeformage. Cependant, un ajout d'eau d'appoint est nécessaire puisque la consommation globale en eau du procédé est d'environ 17 kg/heure pour une production d'environ 50 Nm³/heure (Nm³ signifie "Normal mètre cube" et représente un mètre cube dans les conditions normales de pression et de température) d'hydrogène pur.

Il est possible d'utiliser une autre forme de purification supplémentaire, comme par exemple une oxydation préférentielle (PrOx). Dans une réalisation préférée de ce procédé, la section de purification comprend un système de purification par adsorption (PSA pour Pressure Swing Adsorption selon la terminologie anglo-saxonne). Cette technologie permet d'obtenir de l'hydrogène de très haute pureté (supérieure à 99,9 % volumique) à partir d'un gaz riche en hydrogène. Le PSA est fondé sur le principe d'adsorption des impuretés sur des lits de tamis moléculaires. La régénération est obtenue par détente du lit d'adsorption et balayage par un gaz de purge interne. La continuité du système est assurée par l'installation en parallèle de plusieurs ballons. Les gaz impropres rejetés par cette section de purification, nommés "off-gas" selon la terminologie anglo-saxonne, sont constitués, par exemple lors d'un reformage autotherme, d'une partie de l'hydrogène produit (environ 15 % molaire), de charge hydrocarbonée non consommée dans la réaction (environ 2 % molaire), d'azote (environ 47 % molaire), de dioxyde de carbone (environ 33 % molaire), de monoxyde de carbone (environ 2 % molaire) et d'eau (environ 1 % molaire). Ces gaz sont préférentiellement brûlés dans un brûleur à gaz.

Ce brûleur catalytique à gaz (nommé "Off-Gas Burner" selon la terminologie anglo-saxonne) est alimenté en air (appelé air primaire de combustion, ou air primaire) par un système de ventilation. Si l'installation de production d'hydrogène est couplée à une pile à combustible, les gaz anodiques et cathodiques sortant sont aussi utilisés préférablement comme gaz résiduels et brûlés dans le brûleur de gaz résiduels.

Les effluents chauds du brûleur (gaz de carneau), nommés "flue gas" selon la terminologie anglo-saxonne, servent par la suite à chauffer et/ou à vaporiser indirectement la charge hydrocarbonée et/ou l'eau et/ou l'air par l'intermédiaire d'échangeurs de chaleur.

Ainsi, deux échangeurs de chaleurs sont installés consécutivement sur le flux chaud des effluents du brûleur :
- Le premier échangeur, le plus près du brûleur, et donc en contact avec les effluents très chauds du brûleur, sert à surchauffer un mélange de vapeur d'eau, avec de préférence de l'air et/ou la charge hydrocarbonée sous forme gazeuse. Ce mélange ainsi surchauffé par échange thermique indirect est injecté directement dans le réacteur de reformage, où il sert de combustible.
- Le second échangeur, situé en aval du premier échangeur en considérant le flux chaud des effluents du brûleur, et donc en contact avec ces mêmes effluents refroidis par le premier échangeur, sert de vaporisateur. Il permet d'évaporer un flux d'eau liquidé et/ou une charge hydrocarbonée lorsque celle-ci est liquide. Il génère un flux de vapeur d'eau et/ou de charge hydrocarbonée vaporisée.

Selon une version préférée du procédé, un flux d'eau liquide et/ou une charge hydrocarbonée liquide est vaporisé par le second échangeur de chaleur, est mélangé à une source d'oxygène, préférablement un flux d'air, et ce mélange est surchauffé dans le premier échangeur de chaleur. Cependant, la circulation des flux peut être réalisée par toutes manières différentes que l'homme du métier juge possible. Par exemple, le flux vaporisé issu du second échangeur de chaleur peut être mélangé à d'autres flux avant que ce nouveau mélange pénètre dans le premier échangeur. Il est généralement préféré d'avoir en entrée et en sortie de tous les échangeurs de chaleur des flux monophasés.

Les contraintes de températures sur les deux échangeurs sont importantes pour le bon fonctionnement du procédé. La température de tous les flux ne dépasse préférablement pas 725 °C, qui est la température maximale que peut supporter un matériau peu onéreux. De plus, la distribution de la chaleur entre les deux échangeurs est essentielle principalement pour deux raisons :
- Pour éviter que le mélange sortant du premier échangeur de chaleur et parvenant en entrée du réacteur de reformage ait une température au-delà de sa température d'auto-allumage.
- Pour que le flux d'eau sortant du second échangeur de chaleur soit totalement vaporisé. En effet, si la vaporisation n'est pas complète en sortie du second échangeur, c'est un mélange diphasique qui est ensuite injecté dans le premier échangeur, ce qui diminue l'efficacité de l'échange thermique à l'intérieur de ce premier échangeur car la distribution des deux phases dans l'échangeur n'est généralement pas homogène.

Un moyen pour contrôler la distribution de la chaleur dans les deux échangeurs consiste à diluer le gaz effluent chaud du brûleur par un flux froid qui peut être par exemple de l'air frais ou de l'eau. Les termes de flux froid ou frais désignent dans la suite du texte un flux dont la température est inférieure d'au moins 200 °C à la température de combustion à l'intérieur d'un brûleur. De façon préférée, ce flux frais a une température comprise entre -10 °C et 400 °C. De façon très préférée, ce flux frais est à température ambiante. De façon encore plus préférée, ce flux frais est un flux d'air. Il est mélangé au gaz chaud de sortie du brûleur entre la sortie de la zone catalytique du brûleur et le premier échangeur. Le mélange peut donc être effectué à l'extérieur du brûleur ou à l'intérieur du brûleur après la zone catalytique. Le débit de ce flux ajouté est contrôlé. Grâce à cet ajout d'un flux frais à l'effluent chaud du brûleur, il est possible de diminuer la température de cet effluent chaud avant son entrée dans le premier échangeur, et ainsi de réduire l'écart de température entre la source chaude et la source froide de l'échangeur. De cette façon, la puissance calorifique cédée par le mélange chaud issu du brûleur dans le premier échangeur est diminuée. Toutefois, le débit du mélange chaud provenant du brûleur étant plus élevé, la température du flux vaporisé surchauffé sortant du premier échangeur reste inchangée. La température du mélange chaud après passage dans le premier échangeur reste suffisamment élevée pour permettre la vaporisation totale de l'eau, et/ou de la charge hydrocarbonée lorsqu'elle est liquide, qui est introduite dans le second échangeur.

De façon préférée, le mélange de gaz résiduels de la section de purification de l'hydrogène et d'air primaire de combustion est brûlé dans le brûleur catalytique à environ 900 °C. Le flux frais, préférentiellement d'air, injecté dans le gaz effluent du brûleur, permet de réduire la température dudit gaz effluent à une température inférieure à 725 °C, de préférence entre 600 °C et 725 °C, de manière plus préférée entre 600 °C et 700 °C.

Un système de contrôle de la température des gaz effluents du brûleur avant l'adjonction du flux frais et après ladite adjonction permet de régler la température de l'effluent chaud du brûleur. Le premier système de contrôle de la température avant l'adjonction du flux frais est relié au système de distribution de l'air primaire de combustion. Il permet d'obtenir une combustion efficace et une température de combustion généralement d'environ 900 °C. Le second système de contrôle de la température après l'adjonction du flux frais est relié au système de distribution du flux frais, préférentiellement de l'air. Il permet de régler la température du gaz effluent du brûleur chaud avant le premier échangeur de chaleur.

Dans une variante préférée du procédé, un flux d'eau est vaporisé dans le second échangeur de chaleur, puis surchauffé dans le premier échangeur. Toujours selon cette variante, l'approvisionnement en air du réacteur de reformage, lorsque le reformage est autotherme, s'effectue par addition du flux d'air audit flux d'eau en deux points : l'un entre le second échangeur et le premier échangeur, l'autre entre le premier échangeur et le réacteur de reformage. L'approvisionnement en air est contrôlé de façon préférée par un système compresseur/vanne relié à un capteur de température situé sur le flux issu du réacteur de reformage. En effet, l'ajout d'une source d'oxygène dans le réacteur de reformage favorise les réactions d'oxydation partielle et totale de la charge hydrocarbonée, qui sont exothermiques. La répartition de cet air froid entre le premier et le second point d'entrée sur le flux d'eau est quant à elle contrôlée de façon préférée par une vanne reliée à un capteur de température situé à l'entrée du réacteur de reformage. De cette manière, la température en entrée du reformeur autotherme ne dépasse pas préférentiellement la température d'auto-allumage du combustible.

### VARIANTE PRÉFÉRÉE DE RÉALISATION DE L'INVENTION

La figure 1 est un schéma de procédé représentant une variante préférée du procédé de production d'hydrogène selon l'invention.

Ce procédé comprend un reformeur autotherme 40, un brûleur catalytique 69 et une section de purification du gaz riche en hydrogène produit comportant elle-même un réacteur de conversion du monoxyde de carbone à l'eau 45, un condenseur 52, un système de purification par adsorption (PSA) 58 et un système de purification de l'eau 7. L'intégration thermique est assurée par quatre échangeurs de chaleur 43, 48, 78 et 80, ainsi qu'un refroidisseur à eau 50. Deux pompes 2 et 10 servent à approvisionner l'installation en charge hydrocarbonée d'une part et en eau d'autre part. Trois compresseurs 27, 63 et 72 servent quant à eux à l'approvisionnement en air.

La charge hydrocarbonée est amenée dans l'installation via la ligne 1, la pompe 2 et la ligne 3. La vanne 4 sert à régler le débit d'arrivée de la charge hydrocarbonée. Ce flux est mélangé à un flux d'eau liquide arrivant par la ligne 18.

L'eau froide entre dans l'installation par la ligne 6. Elle pénètre dans le système de purification d'eau 7 et en ressort via la ligne 9, la pompe 10 et la ligne 11. Une partie de ce flux d'eau, dont le débit est régulé par la vanne 18, est renvoyé dans le système de purification d'eau 7 via la ligne 55. L'autre partie est destinée au procédé de reformage lui-même et passe par la ligne 13. Pour optimiser l'efficacité thermique du procédé, le flux arrivant par la ligne 13 est divisé en trois flux : le débit de la ligne 14 est réglé par la vanne 17, le débit de la ligne 15 est réglé par le vanne 19 et le débit de la ligne 16 est réglé par la vanne 22. Le flux d'eau liquide contrôlé par la vanne 17 est mélangé au flux de charge hydrocarbonée liquide via la ligne 18. Le mélange eau liquide/charge hydrocarbonée liquide ainsi formé passe via la ligne 5 dans l'échangeur de chaleur 43 où il est mis en contact avec le flux chaud issu du reformeur 40 et passant de la ligne 42 à la ligne 44. Le flux qui ressort de cet échangeur par la ligne 39 est totalement vaporisé. Il pénètre dans le réacteur de reformage autotherme 40. Le flux d'eau liquide contrôlé par la vanne 19 entre dans l'échangeur de chaleur 48 via la ligne 20. Il est totalement vaporisé par échange de chaleur indirect avec l'effluent du réacteur de conversion du monoxyde de carbone à l'eau 45 entrant chaud dans l'échangeur 48 par la ligne 47 et en ressortant par la ligne 49. Le flux d'eau vaporisée ressort de l'échangeur par la ligne 21. Le flux d'eau contrôlé par la vanne 22 entre dans l'échangeur de chaleur 80 via la ligne 23. Il est totalement vaporisé par échange de chaleur indirect avec le flux chaud entrant dans l'échangeur 80 par la ligne 79 et en ressortant par la ligne 81. Le flux d'eau vaporisée ressort de l'échangeur par la ligne 24. Les deux flux d'eau vaporisée dans les lignes 21 et 24 sont mélangés et passent dans la ligne 25. L'addition d'un flux d'air par la ligne 31 permet de générer un flux gazeux d'air et de vapeur d'eau dans la ligne 36, qui est surchauffé dans l'échangeur de chaleur 78 par contact avec le flux chaud arrivant par la ligne 77 et sortant par la ligne 79. Le mélange d'air et de vapeur d'eau surchauffé sort de l'échangeur de chaleur 78 par la ligne 37, est mélangé à un flux d'air froid arrivant par la ligne 35 et entre dans le réacteur de reformage 40 via la ligne 38.

L'air servant à la réaction de reformage entre dans le procédé par la ligne 26 et le compresseur 27. Son débit est réglé par la vanne 30 et le régulateur/indicateur de débit 28. Celui-ci est couplé au régulateur/indicateur de température 29 qui mesure la température du flux de la ligne 42 sortant du réacteur de reformage. Une partie de l'air arrive par la ligne 31 et est mélangée au flux de vapeur d'eau arrivant ligne 25. L'autre partie arrive via la ligne 32, la vanne 33 et la ligne 35 et est mélangée au flux de vapeur d'eau et d'air surchauffé arrivant ligne 37. La vanne 33 est contrôlée par le régulateur/indicateur de température 34 qui mesure la température à l'entrée du réacteur de reformage autotherme 40. Le réacteur de reformage autotherme 40 est approvisionné en charge hydrocarbonée et en vapeur d'eau par la ligne 39 et en vapeur d'eau et en air par la ligne 38. En entrée du réacteur, le régulateur/indicateur de température 34, relié à la vanne 33, permet de contrôler que la température du mélange est inférieure à sa température d'auto-allumage. Le mélange est mis en contact avec le lit catalytique 41. L'effluent gazeux sortant du reformeur par la ligne 42 est un gaz riche en hydrogène chaud. Sa température est contrôlée par le régulateur/indicateur de température 29, relié au régulateur/indicateur de débit 28 et à la vanne 30. Le gaz riche en hydrogène de la ligne 42 est refroidi dans l'échangeur 43 par contact thermique avec le flux froid entrant ligne 5 et sortant ligne 39. Le flux ainsi refroidi passe via la ligne 44 dans le réacteur de conversion du monoxyde de carbone à l'eau 45 où il est mis en contact avec le catalyseur 46. L'effluent chaud de la ligne 47 est refroidi dans l'échangeur de chaleur 48 par contact thermique avec le flux d'eau liquide passant dans l'échangeur de la ligne 20 à la ligne 21. Le gaz riche en hydrogène ressort par la ligne 49 et est encore refroidi dans le refroidisseur 50. En sortie, le flux passe via la ligne 51 dans le condenseur 52, où l'eau restante non consommée dans le procédé est retirée. Celle-ci est évacuée via la ligne 53 contrôlée par la vanne 54 et rejoint le système de purification de l'eau 7 par la ligne 55. Après le passage dans le condenseur 52, le gaz riche en hydrogène sec est conduit dans le système de purification par adsorption 58 via la ligne 56 contrôlée par la vanne 57. Ce système de purification 58 permet de générer un gaz d'hydrogène pur, qui est soutiré par la ligne 59. Il en sort également un flux gazeux résiduel par la ligne 60, contrôlée par la vanne 61.

Ce flux gazeux résiduel 60 est injecté dans le brûleur de gaz résiduel 69 contenant un catalyseur 70. Le brûleur est également approvisionné en air, servant à la combustion. Cet air entre dans l'installation par la ligne 62 et le compresseur 63, puis les lignes 64 et 68, séparées par une vanne 65. Cette vanne est contrôlée par un régulateur/indicateur de débit 66, lui-même contrôlé par un régulateur/indicateur de température 67 qui mesure la température en sortie de la zone de combustion catalytique du brûleur. Une seconde arrivée d'air se situe à la sortie de la zone catalytique 70 du brûleur 69. Un flux d'air frais entre dans l'installation par la ligne 71, le compresseur 72 et la ligne 73. Une vanne 74, reliée à un régulateur/indicateur de température 75 installé sur la ligne 77 en sortie du brûleur, permet de réguler la température de l'effluent chaud sortant du brûleur via la ligne 77.

Cet effluent chaud passe dans l'échangeur de chaleur 78 où il surchauffe le flux gazeux entrant par la ligne 36 et sortant par la ligne 37. L'effluent du brûleur refroidi ressort de l'échangeur 78 par la ligne 79, puis entre dans un second échangeur, l'échangeur de chaleur 80, où il permet la vaporisation du flux d'eau entrant par la ligne 23 et sortant par la ligne 24. Enfin, les gaz sortant de l'échangeur 80 sont rejetés sous forme de gaz de carneau (flue gas selon la terminologie anglo-saxonne) par la ligne 81.

## Revendications

1. Procédé de production d'hydrogène intégré thermiquement par reformage d'une charge hydrocarbonée comprenant :
- une étape a dans laquelle un flux, dont la température est inférieure d'au moins 200 °C à la température de combustion à l'intérieur d'un brûleur, est sélectionné parmi un flux d'air et un flux d'eau, et est mélangé à l'effluent issu dudit brûleur, permettant de réduire la température de l'effluent issu dudit brûleur à moins de 725 °C ,
- une étape b dans laquelle le mélange issu de l'étape a entre dans un premier échangeur de chaleur, sert à surchauffer au moins un flux de vapeur d'eau et/ou de charge hydrocarbonée sous forme gazeuse, ledit flux ainsi surchauffé par échange thermique indirect étant injecté directement dans un réacteur de reformage où il sert de combustible, et ledit mélange ressort de l'échangeur,
- une étape c dans laquelle le mélange issu de l'étape b entre dans un second échangeur de chaleur et sert à évaporer totalement un flux d'eau liquide et/ou de charge hydrocarbonée lorsque celle-ci est liquide.

2. Procédé selon la revendication 1 dans lequel un flux, dont la température est comprise entre - 10 °C et 400 °C, sélectionné parmi un flux d'air et un flux d'eau, est mélangé en sortie du brûleur à l'effluent issu du brûleur à l'étape a.

3. Procédé selon la revendication 2 dans lequel un flux d'air à température ambiante est mélangé en sortie du brûleur à l'effluent issu du brûleur à l'étape a.

4. Procédé selon l'une des revendications 1 à 3 dans lequel la température de l'effluent issu de l'étape a a une température comprise entre 600 °C et 700 °C.

5. Procédé selon l'une des revendications 1 à 4 dans lequel un flux d'eau vaporisé dans le second échangeur de chaleur à l'étape c est ensuite surchauffé dans le premier échangeur à l'étape b.

6. Procédé selon la revendication 5 dans laquelle un flux d'air est mélangé au flux d'eau entre sa vaporisation dans le second échangeur et sa surchauffe dans le premier échangeur.

7. Procédé selon l'une des revendications 1 à 6 dans lequel la charge hydrocarbonée est liquide

8. Procédé selon l'une des revendications 1 à 7 dans lequel la charge hydrocarbonée est de l'éthanol.

9. Procédé selon l'une des revendications 1 à 8 dans lequel la réaction de reformage est un reformage autotherme.

10. Procédé selon l'une des revendications 1 à 9 dans lequel le reformat issu du réacteur de reformage est traité dans une section de purification pour générer un gaz d'hydrogène pur.

11. Procédé selon la revendication 10 dans lequel l'eau contenu dans le gaz riche en hydrogène issu du réacteur de reformage est éliminée grâce à un condenseur situé dans la section de purification.

12. Procédé selon la revendication 11 dans lequel l'eau recueilli dans le condenseur est recyclée dans le procédé.

13. Procédé selon la revendication 12 dans lequel l'eau recueilli dans le condenseur est envoyée dans le réacteur de reformage pour être utilisée comme réactif de la réaction de vaporeformage.

14. Procédé selon l'une des revendications 10 à 13 dans lequel un réacteur de conversion du monoxyde de carbone à l'eau et un système de purification par adsorption traitent successivement le reformat issu du réacteur de reformage dans la section de purification.

15. Procédé selon l'une des revendications 10 à 14 dans lequel les gaz résiduels rejetés par la section de purification servent de combustible au brûleur.

## Claims

1. Process for the production of hydrogen that is integrated thermally by reforming a hydrocarbon feedstock that comprises:
- A stage a wherein a stream, whose temperature is less by at least 200°C than the combustion temperature inside a burner, is selected from among a stream of air and a stream of water and is mixed with the effluent that is obtained from said burner, making it possible to reduce the temperature of the effluent that is obtained from said burner to less than 725°C,
- A stage b, wherein the mixture that is obtained from stage a enters a first heat exchanger, is used to superheat at least one water vapor stream and/or hydrocarbon feedstock stream in gaseous form, whereby said stream that is thus superheated by indirect heat exchange is injected directly into a reforming reactor where it is used as a fuel, and said mixture exits from the exchanger,
- A stage c wherein the mixture that is obtained from stage b enters a second heat exchanger and is used to evaporate totally a stream of liquid water and/or hydrocarbon feedstock when the latter is liquid.

2. Process according to claim 1, wherein a stream, whose temperature is between -10°C and 400°C, selected from among an air stream and a water stream, is mixed at the outlet of the burner with the effluent that is obtained from the burner in stage a.

3. Process according to claim 2, wherein a stream of air at ambient temperature is mixed at the outlet of the burner with the effluent that is obtained from the burner in stage a.

4. Process according to one of claims 1 to 3, wherein the temperature of the effluent that is obtained from stage a has a temperature of between 600°C and 700°C.

5. Process according to one of claims 1 to 4, wherein a stream of evaporated air in the second heat exchanger in stage c is then superheated in the first exchanger in stage b.

6. Process according to claim 5, wherein an air stream is mixed with the water stream between its evaporation in the second exchanger and its superheating in the first exchanger.

7. Process according to one of claims 1 to 6, wherein the hydrocarbon feedstock is liquid.

8. Process according to one of claims 1 to 7, wherein the hydrocarbon feedstock is ethanol.

9. Process according to one of claims 1 to 8, wherein the reforming reaction is an autothermal reforming.

10. Process according to one of claims 1 to 9, wherein the reformate that is obtained from the reforming reactor is treated in a purification section to generate a pure hydrogen gas.

11. Process according to claim 10, wherein the water that is contained in the hydrogen-rich gas that is obtained from the reforming reactor is eliminated using a condenser that is located in the purification section.

12. Process according to claim 11, wherein the water that is collected in the condenser is recycled in the process.

13. Process according to claim 12, wherein the water that is collected in the condenser is sent into the reforming reactor to be used as a reagent of the vapor-reforming reaction.

14. Process according to one of claims 10 to 13, wherein a reactor for converting carbon monoxide into water and a system for purification by adsorption treat successively the reformate that is obtained from the reforming reactor in the purification section.

15. Process according to one of claims 10 to 14, wherein the residual gases that are discharged by the purification section are used as a fuel in the burner.

## Patentansprüche

1. Thermisch integriertes Verfahren zur Herstellung von Wasserstoff durch Reformierung eines kohlenwasserstoffhaltigen Einsatzguts, wobei das Verfahren Folgendes umfasst:
- einen Schritt a, in dem ein Strom, dessen Temperatur mindestens 200°C. unter der Verbrennungstemperatur im Inneren eines Brenners liegt, aus einem Luftstrom und einem Wasserstrom ausgewählt und mit dem von dem Brenner abgegebenem Abstrom gemischt wird, was das Senken der Temperatur des von dem Brenner abgegebenem Abstroms auf weniger als 725 °C ermöglicht,
- einen Schritt b, in dem das aus Schritt a resultierende Gemisch in einen ersten Wärmetauscher eintritt, der zum Überhitzen mindestens eines Wasserdampfstroms und/oder eines Stroms einer kohlenwasserstoffhaltigen Charge in Gasform dient, wobei der durch indirekten Wärmetausch so überhitzte Strom direkt in einen Reformierreaktor eingespritzt wird, in dem er als Brennstoff dient, und das Gemisch aus dem Tauscher austritt,
- einen Schritt c, in dem das aus Schritt b stammende Gemisch in einen zweiten Wärmetauscher eintritt und zum vollständigen Verdampfen eines flüssigen Wasserstroms und/oder eines Stroms von kohlenwasserstoffhaltlger Charge, wenn dieser flüssig ist, dient.

2. Verfahren nach Anspruch 1, in dem ein Strom, dessen Temperatur zwischen -10 °C und 400 °C liegt und der aus einem Luftstrom und einem Wasserstrom ausgewählt ist, am Ausgang des Brenners mit dem von dem Brenner abgegebenen Abstrom von Schritt a gemischt wird.

3. Verfahren nach Anspruch 2, in dem ein Luftstrom bei Umgebungstemperatur am Ausgang des Brenners mit dem von dem Brenner abgegebenem Abstrom von Schritt a gemischt wird.

4. Verfahren nach einem der Ansprüche 1 bis 3, bei dem die Temperatur des abgegebenem Abstroms von Schritt a eine Temperatur zwischen 600 °C und 700 °C ist.

5. Verfahren nach einem der Ansprüche 1 bis 4, in dem ein in dem zweiten Wärmetauscher von Schritt c verdampfter Wasserstrom anschließend in dem ersten Tauscher von Schritt b überhitzt wird.

6. Verfahren nach Anspruch 5, in dem ein Luftstrom mit dem Wasserstrom zwischen dessen Verdampfung im zweiten Tauscher und dessen Überhitzung im ersten Tauscher gemischt wird.

7. Verfahren nach einem der Ansprüche 1 bis 6, bei dem die kohlenwasserstoffhaltige Charge flüssig ist.

8. Verfahren nach einem der Ansprüche 1 bis 7, bei dem die kohlenwasserstoffhaltige Charge Ethanol ist.

9. Verfahren nach einem der Ansprüche 1 bis 8, in dem es sich bei der Reformierreaktion um eine autotherme Reformierung handelt.

10. Verfahren nach einem der Ansprüche 1 bis 9, in dem das von dem Reformierreaktor abgegebene Reformat in einem Reinigungsabschnitt behandelt wird, um ein reines Wasserstoffgas zu erzeugen.

11. Verfahren nach Anspruch 10, In dem das Wasser, das in dem von dem Reformierreaktor abgegebenen, an Wasserstoff reichen Gas enthalten ist, dank eines in dem Reinigungsabschnitt angeordneten Kondensators entfernt wird.

12. Verfahren nach Anspruch 11, in dem das in dem Kondensator aufgefangene Wasser in das Verfahren zurückgeführt wird.

13. Verfahren nach Anspruch 12, in dem das in dem Kondensator aufgefangene Wasser In den Reformierreaktor befördert wird, um es als Reaktionsmittel der Dampfreformierreaktlon zu verwenden.

14. Verfahren nach einem der Ansprüche 10 bis 13, in dem ein Reaktor zur Umwandlung von Kohlenmonoxid in Wasser und ein System zur Reinigung durch Adsorption nacheinander das von dem Reformierreaktor abgegebenen Reformat in dem Reinigungsabschnitt behandeln.

15. Verfahren nach einem der Ansprüche 10 bis 14, in dem die von dem Reinigungsabschnitt ausgestoßenen Restgase in dem Brenner als Brennstoff dienen.
